# EUROPÄISCHE PATENTSCHRIFT

(11) **EP 3 721 699 B1**
(45) Veröffentlichungstag und Bekanntmachung des Hinweises auf die Patenterteilung: **05.07.2023**
(21) Anmeldenummer: 20168468.5
(22) Anmeldetag: 07.04.2020
(51) Int. Cl.: A01F 15/07

(54) **BALLENWICKELVORRICHTUNG FÜR EINE BALLENPRESSE, BELADEHILFE UND BALLENPRESSE**
BALE WRAPPING DEVICE FOR A BALER, LOADING AID AND BALER
DISPOSITIF D'ENROULEMENT DE BALLES POUR UNE PRESSE À BALLES, AIDE AU CHARGEMENT ET PRESSE À BALLES

(30) Priorität: 12.04.2019 DE 102019205325
(43) Veröffentlichungstag der Anmeldung: 14.10.2020
(73) Patentinhaber: Deere & Company, Moline, IL 61265 (US)
(72) Erfinder: LEBEAU, JONATHAN, 68163 Mannheim (DE); GRESSET, PASCAL, 68163 Mannheim (DE); PERROTIN, FREDERIC, 68163 Mannheim (DE)
(74) Vertreter: Stein, Stefan

(56) Entgegenhaltungen:
- EP-A1- 1 099 366
- EP-A1- 1 121 850
- EP-A1- 3 459 342
- EP-B1- 1 121 850
- EP-B1- 1 602 270
- DE-A1- 19 711 742
- US-A- 4 691 503

## Beschreibung

Die Erfindung betrifft eine Ballenwickelvorrichtung gemäss dem Oberbegriff des unabhängigen Anspruchs 1 und eine Ballenpresse mit einer Ballenwickelvorrichtung gemäss dem Oberbegriff des unabhängigen Anspruchs 12.

Ballenpressen sind bekannt. Ferner ist es bekannt, Ballenpressen mit einer Ballenwickelvorrichtung auszurüsten, wodurch ein gepresster Ballen mit einem Umwicklungsmaterial umwickelt wird und im Anschluss daran in gewickelter Form ausgeworfen werden kann. Der Ballen wird in einer Presskammer, insbesondere einer zylindrischen Presskammer, der Ballenpresse, insbesondere einer Rundballenpresse, während einer Ballenbildungsphase in Form gebracht. Dazu wird auf dem Boden liegendes Erntegut von einer Erntegutaufnahmeeinrichtung in die Presskammer gefördert und durch angeordnete Pressmittel ein zylindrischer Ballen, auch Rundballen genannt, geformt. Die Presskammer kann als feste Presskammer, mit zylindrisch angeordneten Presswalzen, oder auch als variable Presskammer, mit variablen Pressmitteln, beispielsweise Pressriemen oder Pressketten, ausgebildet sein.

In einer der Ballenbildungsphase folgenden Einführungsphase, wird von einer Umwicklungsmaterialrolle ein Umwicklungsmaterial in Richtung des mittlerweile ausgeformten Rundballens in die Presskammer geführt und von der Außenseite des Ballens mitgerissen. Als Umwicklungsmaterial wird, üblicherweise Netz, Folie oder Garn verwendet. Durch den sich drehenden Rundballen wird das Umwicklungsmaterial in einer Wickelphase um den Rundballen geführt. Es folgt eine Trennphase, in der das Umwicklungsmaterial durch eine Trenneinrichtung vom Ballen getrennt wird, bevor der Ballen in der Ballenauswurfphase ausgeworfen bzw. auf den Boden abgelegt wird.

Ausserdem sind aus dem Stand der Technik verschiedene Ballenwickelvorrichtungen bekannt, mit denen eine Umwicklungsmaterialrolle in eine Abrolleinrichtung z.B. einer Rundballenpresse eingesetzt werden kann. So offenbart z.B. die EP 1 099 366 eine Ladevorrichtung, bei der eine Hüllmittelrolle auf einen Träger aufgelegt und mit diesem in eine Betriebsstellung gebracht werden kann. Die EP 1 602 270 B1 offenbart eine Vorrichtung, mit der das Einlegen einer Materialbahnrolle in eine Vorratsstation und das Umladen einer Materialbahnrolle von der Vorratsstation in die Abrolleinrichtung ermöglicht wird. Die US 4 691 503 A offenbart eine Ballenwickelvorrichtung.

Bei allen erwähnten Ballenwickelvorrichtungen bzw. Ballenpressen sind die Einrichtungen zum Beladen mit der Umwicklungsmaterialrolle konstruktiv sehr aufwändig ausgeführt, was beispielsweise zu einer kostenintensiven Montage und/oder sehr preisaufwändigen bzw. zusätzlichen Ersatzteilen und/oder zu für Verschleiss anfälligen Bauteilen führt. Darüber hinaus ist es oft sehr aufwändig die Umwicklungsmaterialrolle der Abrolleinrichtung zuzuführen und in diese einzuspannen, was das Beladen der Ballenpresse bzw. der Abrolleinrichtung für den Betreiber sehr aufwändig gestaltet. Ausserdem bedarf es nach dem Einlegen der Umwicklungsmaterialrolle noch weiterer Handgriffe, bis die Ballenwickelvorrichtungen betriebsbereit ist. Mit anderen Worten, das der Erfindung zugrundeliegende Problem kann darin gesehen werden, dass die bekannten Ballenwickelvorrichtungen bzw. Ballenpressen konstruktiv zu aufwändig ausgestaltet sind und/oder einer aufwändigen Inbetriebnahme bedürfen.

Ausgehend von diesem Stand der Technik ist es daher eine Aufgabe der vorliegenden Erfindung eine Ballenwickelvorrichtung und eine Ballenpresse vorzuschlagen, die die aus dem Stand der Technik bekannten Nachteile weitgehend vermeiden, insbesondere eine Ballenwickelvorrichtung und eine Ballenpresse vorzuschlagen, die konstruktiv einfach ausgestaltet sind und/oder eine einfache Inbetriebnahme ermöglichen.

Diese Aufgabe wird durch eine Ballenwickelvorrichtung für eine Ballenpresse mit den Merkmalen des Anspruchs 1 und eine Ballenpresse mit den Merkmalen des Anspruchs 12 gelöst.

Die abhängigen Ansprüche beziehen sich auf besonders vorteilhafte Ausführungsformen der Erfindung.

Erfindungsgemäß wird eine Ballenwickelvorrichtung für eine Ballenpresse, insbesondere eine Rundballenpresse, vorgeschlagen. Die Ballenwickelvorrichtung umfasst eine erste Umwicklungsmaterialrolle mit einem ersten Umwicklungsmaterial und eine erste Abrolleinrichtung, wobei die erste Abrolleinrichtung eine Ladeeinrichtung zum Beladen der ersten Abrolleinrichtung mit der ersten Umwicklungsmaterialrolle umfasst. Die Ladeeinrichtung ist um eine Schwenkachse schwenkbar gelagert und zwischen einer Ladestellung und einer Betriebsstellung schwenkbar. Ausserdem weist die Ladeeinrichtung eine Anpressrolle auf, wobei die Schwenkachse parallel zur Rotationsachse der Anpressrolle angeordnet ist. In der Betriebsstellung wirkt die Ladeeinrichtung mittels der Anpressrolle auf die erste Umwicklungsmaterialrolle, derart, dass die erste Umwicklungsmaterialrolle von der Ladeeinrichtung mittels der Anpressrolle mit einer Anpresskraft beaufschlagbar ist, insbesondere beaufschlagt wird.

Ausserdem kann die erste Umwicklungsmaterialrolle von der Ladeeinrichtung in der Betriebsstellung mittels der Anpressrolle zumindest teilweise haltbar sein, insbesondere gehalten werden, und/oder eine Position der ersten Umwicklungsmaterialrolle kann von der Ladeeinrichtung in der Betriebsstellung mittels der Anpressrolle zumindest teilweise sicherbar sein, insbesondere in der ersten Abrolleinrichtung. Die Anpressrolle kann mit der ersten Umwicklungsmaterialrolle, insbesondere in der Betriebsstellung der Ladeeinrichtung, in Eingriff stehen. Gleichzeitig kann die erste Abrolleinrichtung mittels der Ladeeinrichtung mit der ersten Umwicklungsmaterialrolle beladbar sein, wenn die Ladeeinrichtung von der Ladestellung in die Betriebsstellung bewegt wird. Mit anderen Worten, die Ladeeinrichtung ist derart um die Schwenkachse schwenkbar gelagert, dass die Ladeeinrichtung zwischen einer Ladestellung, in der die Ladeeinrichtung mit der ersten Umwicklungsmaterialrolle beladbar ist, und einer Betriebsstellung beweglich ist, in der die erste Umwicklungsmaterialrolle von der Ladeeinrichtung mittels der Anpressrolle mit einer Anpresskraft beaufschlagbar ist, insbesondere auch haltbar und/oder positionierbar ist.

Das erste Umwicklungsmaterial kann eine Folie sein, insbesondere eine Kunststofffolie oder eine Folie aus Kunststoff sein oder eine Kunststoff umfassende Folie oder eine mit Kunststoff beschichtete Folie sein. Das erste Umwicklungsmaterial kann auch eine Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein.

In einem Betriebszustand der Ballenwickelvorrichtung, kann erstes Umwicklungsmaterial von der ersten Umwicklungsmaterialrolle abgenommen bzw. abgerollt werden. Die erste Abrolleinrichtung umfasst eine oder mehrere Führungsrollen und eine Bremsrolle.

Die eine oder mehrere Führungsrollen und die Bremsrolle sind mit der ersten Umwicklungsmaterialrolle und/oder dem ersten Umwicklungsmaterial in Eingriff bringbar bzw. stehen in Eingriff. Ausserdem können die eine oder mehrere Führungsrollen und die Bremsrolle die Position der ersten Umwicklungsmaterialrolle sichern und/oder können beispielsweise mittels eines oder mehrerer Arme oder Andrückarme gegenüber der ersten Umwicklungsmaterialrolle bewegbar sein. Dabei kann/können die eine oder die mehreren Führungsrollen und die Bremsrolle bremsbar und/oder antreibbar oder frei drehend, also freilaufend, ausgebildet sein. Bevorzugt kann die Führungsrollen frei drehend und die Bremsrolle bremsbar und frei drehend ausgebildet. Bei dem Arm kann es sich einfacherweise um ein Gestänge, einen Lenker, ein Seil oder dergleichen, die in Lagern aufgenommen sind handeln. Dessen ungeachtet, können aber auch elektrisch oder hydraulisch verstellbare Führungsrollen und/oder die Bremsrolle vorgesehen werden.

Die Ladeeinrichtung kann manuell oder automatisch bewegt werden. Während einfach und gut zugängliche Ladeeinrichtungen manuell, also per Hand zwischen ihren Stellungen geschwenkt werden können, ist es insbesondere bei Ladeeinrichtungen mit hohem Gewicht und/oder schlechter Zugänglichkeit von Vorteil, wenn dessen Verstellung automatisch durchgeführt werden kann. Die Ladeeinrichtung kann mittels eines Aktuators betätigbar sein, insbesondere zwischen der Ladestellung und der Betriebsstellung schwenkbar und/oder einstellbar sein. Der Aktuator kann beispielsweise eine Feder und/oder ein Zylinder oder ein Hydraulikzylinder sein. Die Betätigungsart des Aktuators kann mechanisch und/oder elektrisch und/oder hydraulisch und/oder pneumatisch sein. Der Aktuator kann auch als Elektromotor, beispielsweise Spindelmotor, ausgebildet sein. Auch eine entsprechende Anordnung mit einem Seilzug ist denkbar, um die Betätigung rein mechanisch zu gestalten. Die Ladeeinrichtung kann einen Träger, insbesondere eine Rinne oder ein Tragrost, für wenigstens eine erste Umwicklungsmaterialrolle sein. Die Ladeeinrichtung kann auch wenigstens eine seitliche bzw. stirnseitige Öffnung zum einfachen Einlegen der Umwicklungsmaterialrolle aufweisen. Die Ladeeinrichtung kann auch mittels einer Stelleinrichtung verriegelbar sein, beispielsweise mittels eines Hebels bzw. Riegels und/oder des Aktuators und/oder eines Motors. Der Ladeeinrichtung kann aus Stahl oder Kunststoff hergestellt sein und kann ausreichend stark, um die erste Umwicklungsmaterialrolle tragen zu können. Üblicherweise kann er als ein Schweißzusammenbau ausgebildet sein, der sich im Wesentlichen zwischen zwei Seitenwänden der Ballenpresse oder zwischen deren gedachter Verlängerung erstreckt. Die Ladeeinrichtung kann ein, zwei oder mehrere Lager umfassen.

Wesentlich für die Erfindung ist, dass die Ladeeinrichtung nicht nur zum Beladen der ersten Abrolleinrichtung mit der ersten Umwicklungsmaterialrolle ausgebildet ist, sondern gleichzeitig die erste Umwicklungsmaterialrolle in der Betriebsstellung mittels der Anpressrolle mit der Anpresskraft beaufschlagbar ist. Die Anpresskraft kann dabei proportional zu einer Kraft sein, mit der die Ladeeinrichtung auf die erste Umwicklungsmaterialrolle drückt und gegebenenfalls aus dem Reibschluss der Anpressrolle mit der ersten Umwicklungsmaterialrolle. Darüber hinaus wird die Ballenwickelvorrichtung mit einem Handgriff betriebsbereit gemacht, nämlich durch die Bewegung der Ladeeinrichtung von der Ladestellung, in der die Ladeeinrichtung beladen wird, in die Betriebsstellung, in der die Ladeeinrichtung als Pressmittel auf die erste Umwicklungsmaterialrolle wirkt. Dies vereinfacht vorteilhafterweise die konstruktive Ausgestaltung der Ballenwickelvorrichtung, das auf zusätzliche Anpressmittel verzichtet werden kann. Darüber hinaus ist somit vorteilhafterweise sichergestellt, dass die Ladevorrichtung einfach beladen werden kann und/oder schnell betriebsbereit ist, was Zeit spart. Vorteilhafterweise wird ausserdem die erste Umwicklungsmaterialrolle aufgrund der Anpresskraft mit einem bestimmbaren bzw. bestimmten Rollwiderstand belegt, sodass das erste Umwicklungsmaterial beim Umhüllen, insbesondere in der Einführungs- und/oder Wickelphase, gestrafft ist.

Erfindungsgemäß umfasst die erste Abrolleinrichtung eine Führungsrolle und eine Bremsrolle, die mit der ersten Umwicklungsmaterialrolle in Eingriff bringbar sind, insbesondere in der Betriebsstellung. In der Betriebsstellung wirkt dabei die Ladeeinrichtung mittels der Anpressrolle auf die erste Umwicklungsmaterialrolle, derart, dass die erste Umwicklungsmaterialrolle von der Ladeeinrichtung mittels der Anpressrolle mit einer Anpresskraft beaufschlagbar ist, insbesondere beaufschlagt wird, und die erste Umwicklungsmaterialrolle von, insbesondere zwischen, der Bremsrolle und der Führungsrolle und der Anpressrolle an drei Stellen haltbar ist, oder insbesondere gehalten wird. Ausserdem kann eine Position der ersten Umwicklungsmaterialrolle mittels der Anpressrolle der Ladeeinrichtung in der Betriebsstellung und der Bremsrolle und der Führungsrolle an drei Stellen sicherbar sein, insbesondere in der ersten Abrolleinrichtung. In der Betriebsstellung der Ladeeinrichtung können die Bremsrolle und/oder die Führungsrolle mit der ersten Umwicklungsmaterialrolle in Eingriff stehen. Die Führungsrolle und/oder die Bremsrolle und/oder die Anpressrolle können frei drehende bzw. freilaufende Rollen sein. Die erste Abrolleinrichtung kann auch mehrere Führungsrollen umfassen, bevorzugt zwei, drei, vier oder fünf Führungsrollen. Die erste Umwicklungsmaterialrolle kann mit der Bremsrolle bremsbar, insbesondere auch stoppbar und/oder blockierbar sein, das heisst, dass eine Drehbewegung der ersten Umwicklungsmaterialrolle mit der Bremsrolle bremsbar ist, insbesondere eine Drehbewegung der mit der Bremsrolle in Eingriff stehenden ersten Umwicklungsmaterialrolle mit der Bremsrolle bremsbar ist.

Dazu kann die Bremsrolle mit der ersten Umwicklungsmaterialrolle in Eingriff und/oder einem Reibschluss stehen. Die Bremsrolle kann mittels einer Blockiereinrichtung gebremst und/oder angehalten werden, wobei das Bremsen mit einer aktiven Trennposition der Trenneinrichtung der Ballenwickelvorrichtung synchronisiert sein kann. Das Bremsen der Bremsrolle kann insbesondere erfolgen, sobald der Trennvorgang erfolgt, also in der Trennphase, um zu vermeiden, dass die erste Umwicklungsmaterialrolle nachdreht. Dadurch kann die erste Umwicklungsmaterialrolle vorteilhafterweise von der Ladeeinrichtung mittels der Anpresskraft der Anpressrolle in Richtung der Bremsrolle und Führungsrolle gedrückt werden und so stabil und/oder sicher in der ersten Abrolleinrichtung gehalten werden.

In Ausgestaltung der Erfindung umfasst die Ladeeinrichtung mindestens zwei Schwenkarme, die an dem jeweils einen Ende um die Schwenkachse schwenkbar gelagert sind, und an deren jeweils anderem Ende die Anpressrolle drehbar gelagert ist. Die zwei Schwenkarme können parallel zueinander ausgerichtet sein. Ebenso können die zwei Schwenkarme senkrecht zur Schwenkachse ausgerichtet sein. An dem jeweils einen Ende, an dem die Schwenkarme um die Schwenkachse schwenkbar gelagert sind, können eines, zwei oder mehrere Lager zur Lagerung der Schwenkarme vorgesehen sein. Die Anpressrolle kann zwischen den Schwenkarmen angeordnet sein. Die Anpressrolle kann an dem jeweils anderen Ende der Schwenkarme befestigt und drehbar gelagert sein. Dazu können ebenfalls Lager zur Lagerung der Anpressrolle vorgesehen sein.

In Ausgestaltung der Erfindung ist ein Tragelement an, insbesondere zwischen, den Schwenkarmen angeordnet ist. Das Tragelement kann parallel zur Anpressrolle und/oder zwischen zwei bzw. den Schwenkarmen angeordnet sein. Das Tragelement kann an den Schwenkarmen fest oder lösbar befestigt sein und/oder drehbar an den Schwenkarmen gelagert. Die Ladeeinrichtung kann also im Speziellen von mindestens zwei Schwenkarmen und der Anpressrolle und dem Tragelement ausgebildet sein.

In Ausgestaltung der Erfindung ist an den Schwenkarmen und/oder parallel zu den Schwenkarmen mindestens eine Laderolle angeordnet. Es können auch mehrere Laderollen, bevorzugt zwei, drei, vier oder fünf Laderollen, vorgesehen sein. Die Laderollen können insbesondere zwischen der Anpressrolle und dem Tragelement angeordnet und/oder befestigt sein. Die Laderolle erleichtert vorteilhafterweise das Beladen der Ladeeinrichtung mit der ersten Umwicklungsmaterialrolle, da diese auf der Laderolle in die Ladeeinrichtung rollen kann.

In Ausgestaltung der Erfindung umfasst die Ballenwickelvorrichtung eine zweite Abrolleinrichtung und eine zweite Umwicklungsmaterialrolle mit einem zweiten Umwicklungsmaterial. Die erste Abrolleinrichtung kann in einem ersten Kompartiment und die zweite Abrolleinrichtung kann in einem zweiten Kompartiment der Ballenpresse, insbesondere der Ballenwickelvorrichtung angeordnet sein. Das erste und zweite Kompartiment können voneinander beabstandet oder benachbart zueinander sein. Die zweite Umwicklungsmaterialrolle kann in der zweiten Abrolleinrichtung angeordnet sein. Die Ballenwickelvorrichtung, insbesondere die zweite Abrolleinrichtung, kann auch eine Antriebsrolle umfassen. Die Antriebsrolle kann lediglich mit dem ersten Umwicklungsmaterial der ersten Umwicklungsmaterialrolle, aber nicht der ersten Umwicklungsmaterialrolle selbst, und/oder der zweiten Umwicklungsmaterialrolle in Eingriff bringbar sein, insbesondere auch abrollbar sein. Das erste Umwicklungsmaterial und das zweite Umwicklungsmaterial können der Presskammer gleichzeitig zuführbar sein, bevorzugt kann jedoch entweder das erste Umwicklungsmaterial oder das zweite Umwicklungsmaterial der Presskammer zuführbar sein. Bevorzugt kann die Antriebsrolle nur mit dem ersten Umwicklungsmaterial der ersten Umwicklungsmaterialrolle oder nur mit der zweiten Umwicklungsmaterialrolle in Eingriff bringbar sein oder in Eingriff stehen. Die Trenneinrichtung kann eine Messeranordnung umfassen. Die Messeranordnung kann beispielsweise eine Zahnleiste oder ein Messer, insbesondere eine scharfe Kante sein, welches selbst in der Lage ist das erste Umwicklungsmaterial von der ersten Umwicklungsmaterialrolle und/oder das zweite Umwicklungsmaterial von der zweiten Umwicklungsmaterialrolle zu trennen, d.h. zu schneiden oder zu reißen, oder das Messer kann mit einem Gegenmesser beispielsweise einem Amboss oder an einer Gegenschneide interagieren, insbesondere anlegbar sein, um einen Schereffekt zu erzeugen. Die Trenneinrichtung kann der zweiten Abrolleinrichtung zugeordnet sein. Die Trenneinrichtung kann mit der Blockiereinrichtung verbunden, insbesondere gekoppelt sein. Die Blockiereinrichtung kann um einen Drehpunkt schwenkbar gelagert sein, insbesondere an der Rundballenpresse oder der Ballenwickelvorrichtung. Die Blockiereinrichtung kann mit der Trenneinrichtung betätigbar sein, insbesondere schwenkbar sein. Die Trenneinrichtung kann betätigt werden, wenn der Umwicklungsvorgang beendet ist, beispielsweise in der Trennphase. Die Blockiereinrichtung kann mit der Bremsrolle zusammenwirken, wobei die Blockiereinrichtung mittels der Trenneinrichtung derart betätigbar ist, dass eine Drehbewegung der Bremsrolle mit der Blockiereinrichtung bremsbar, insbesondere stoppbar und/oder blockierbar ist. Die Trenneinrichtung kann einen Aktuator umfassen, der zwischen mindestens einer aktiven Trennposition und einer inaktiven Trennposition bewegbar ist, sodass eine Drehbewegung der Bremsrolle mit der Blockiereinrichtung bremsbar ist, wenn die Trenneinrichtung in der aktiven Trennposition ist bzw. in die aktive Trennposition bewegt wird. Die Ballenwickelvorrichtung kann insbesondere die zweite Umwicklungsmaterialrolle umfassen, wobei die zweite Umwicklungsmaterialrolle mit der Antriebsrolle in Eingriff bringbar ist bzw. in einem Betriebszustand in Eingriff steht. Die Antriebsrolle und die erste Umwicklungsmaterialrolle hingegen können zueinander beabstandet sein. Im Speziellen können die Antriebsrolle und die erste Umwicklungsmaterialrolle derart zueinander beabstandet sein, dass diese nicht miteinander in Eingriff bringbar sind.

Das erste Umwicklungsmaterial als solches, also das abgerollte erste Umwicklungsmaterial, ist mit der Antriebsrolle in Eingriff bringbar, sodass die erste Umwicklungsmaterialrolle mittels des mit der Antriebsrolle in Eingriff stehenden ersten Umwicklungsmaterials indirekt antreibbar ist, indem das erste Umwicklungsmaterial mittels der Antriebsrolle abrollbar ist, und in die Presskammer führbar ist.

Die erste Umwicklungsmaterialrolle kann mittels der Antriebsrolle antreibbar sein, indem das erste Umwicklungsmaterial abgerollt wird. Die zweite Umwicklungsmaterialrolle kann mittels der Antriebsrolle antreibbar und/oder das zweite Umwicklungsmaterial mittels der Antriebsrolle abrollbar sein, sodass das zweite Umwicklungsmaterial abgegeben wird und in die Presskammer führbar ist. Die zweite Umwicklungsmaterialrolle kann mittels der Antriebsrolle antreibbar sein, indem die Antriebsrolle ihre Drehbewegung auf die mit ihr in Eingriff stehende zweite Umwicklungsmaterialrolle direkt überträgt. Mit anderen Worten, das erste und/oder zweiten Umwicklungsmaterial, insbesondere nur das erste oder nur das zweite Umwicklungsmaterial, können mit der Antriebsrolle in Eingriff stehen, sodass, wenn die Antriebsrolle ein Antriebsmoment erfährt, das erste und/oder zweite Umwicklungsmaterial von der ersten und/oder zweiten Umwicklungsmaterialrolle abgegeben wird und in die Presskammer führbar ist. Die Antriebsrolle kann drehfest mit einer Antriebseinrichtung oder einer Antriebs- und Bremseinrichtung verbunden, insbesondere gekoppelt sein. Die Antriebseinrichtung oder einer Antriebs- und Bremseinrichtung kann mittels eines Antriebsriemens derart beaufschlagt werden, dass die Antriebsrolle, insbesondere während der Einführungsphase, ein Antriebsmoment erfährt, sodass das erste Umwicklungsmaterial von der ersten Umwicklungsmaterialrolle und/oder das zweite Umwicklungsmaterial von der zweiten Umwicklungsmaterialrolle abgegeben wird und in die Presskammer führbar ist. Die mit der Antriebsrolle verbundene Antriebs- und Bremseinrichtung kann mittels eines Bremsriemens derart beaufschlagt werden, dass die Antriebsrolle, insbesondere während der Wickelphase und/oder der Trennphase, ein Bremsmoment erfährt. Durch die variabel spannbaren Antriebs- und/oder Bremsriemen können somit in verschiedenen Betriebsstellungen für die Ballenwickelvorrichtung voneinander unabhängig einstellbare Antriebs- und/oder Bremsmomente an der Antriebs- und Bremseinrichtung bzw. an der Antriebsrolle realisiert werden, sodass eine optimale Entlastung und/oder Straffung und/oder Spannung des ersten Umwicklungsmaterial und/oder zweiten Umwicklungsmaterial ermöglicht wird, insbesondere eine ballenpressphasenabhängige Optimierung. Im Speziellen kann also die Antriebsrolle die Ballenwickelvorrichtung in einen Betriebszustand versetzen. Die zweite Abrolleinrichtung kann auch eine, zwei oder mehrere weitere Führungsrollen umfassen. Die weiteren Führungsrollen und/oder die Antriebsrolle können mit der zweiten Umwicklungsmaterialrolle und/oder dem zweiten Umwicklungsmaterial in Eingriff bringbar sein. Ausserdem können die eine oder mehrere weitere Führungsrollen und/oder die Antriebsrolle die Position der zweiten Umwicklungsmaterialrolle sichern und/oder können beispielsweise mittels eines oder mehrerer Arme oder Andrückarme gegenüber der zweiten Umwicklungsmaterialrolle bewegbar sein. Dabei kann/können die weiteren Führungsrollen und/oder die Antriebsrolle bremsbar und/oder antreibbar und/oder frei drehend ausgebildet sein. Bei dem Arm kann es sich einfacherweise um ein Gestänge, einen Lenker, ein Seil oder dergleichen, die in Lagern aufgenommen sind handeln. Dessen ungeachtet, können aber auch elektrisch oder hydraulisch verstellbare Führungsrollen und/oder Antriebsrollen vorgesehen werden. Das erste Umwicklungsmaterial kann von der ersten Abrolleinrichtung, beispielsweise mittels einer oder mehreren Führungsrollen, zur zweiten Abrolleinrichtung, insbesondere der Antriebsrolle, führbar sein. Die Antriebsrolle kann mit einer Antriebseinrichtung, beispielsweise eine Antriebstrommel, oder einer Antriebs- und Bremseinrichtung, beispielsweise einer Antriebs- und Bremstrommel, drehfest verbunden sein. Die Antriebseinrichtung, insbesondere die Antriebstrommel, oder die Antriebs- und Bremseinrichtung, insbesondere die Antriebs- und Bremstrommel, kann mit Antriebsmitteln verbunden sein, sodass die Antriebsrolle mittels der Antriebseinrichtung oder der Antriebs- und Bremseinrichtung antreibbar ist, insbesondere drehbar ist. Die Antriebseinrichtung kann mittels eines Antriebsriemen antreibbar oder die Antriebs- und Bremseinrichtung mittels eines Antriebs- und eines Bremsriemen antreibbar und bremsbar sein. Im Speziellen kann der Antriebsriemen eingangsseitig mit einer Riemenantriebsrolle in Eingriff stehen, wobei letztere mit den Antriebsmitteln verbunden ist. Die mit der Antriebsrolle verbundene Antriebseinrichtung bzw. Antriebs- und Bremseinrichtung kann mittels des Antriebsriemens derart beaufschlagt werden, dass die Antriebsrolle, insbesondere während der Einführungsphase, ein Antriebsmoment erfährt. Ebenso kann die mit der Antriebsrolle verbundene Antriebs- und Bremseinrichtung mittels des Bremsriemens derart beaufschlagt werden, dass die Antriebsrolle, insbesondere während der Wickel- und Trennphase, ein Bremsmoment erfährt, wodurch die zweite Umwicklungsmaterialrolle gebremst und das durch den Ballen mitgerissene bzw. mitgezogene Umwicklungsmaterial gespannt wird. Als Antriebsmittel können angetriebene Bauteile, insbesondere direkt oder indirekt angetriebene Presswalzen der Ballenpresse dienen, derart, dass beispielsweise die Riemenantriebsrolle drehfest mit einer der Presswalzen verbunden ist. Denkbar ist es hier auch einen separaten Antrieb, also einen von den Presswalzen getrennten Antrieb für die Riemenantriebsrolle zu wählen, beispielsweise einen Elektromotor, der in Abhängigkeit verschiedener Betriebsphasen einer Ballenpresse, insbesondere in der Einführungsphase, der Wickelphase und/oder der Trennphase, ansteuerbar ist. Auf diese Weise werden vorteilhafterweise verschiedene Arten von Umwicklungsmaterial, also ein erstes und ein zweites Umwicklungsmaterial, bereitgehalten, um wahlweise eingesetzt zu werden.

Die Ballenwickelvorrichtung kann ausserdem eine Zuführvorrichtung umfassen, mit der das erste und/oder zweite Umwicklungsmaterial der Presskammer zuführbar ist. Das erste und/oder zweite Umwicklungsmaterial können mittels der gleichen Zuführvorrichtung zugeführt werden. Die Verwendung der gleichen Zuführvorrichtung, z.B. Zuführrollen, Greifer etc. hat den Vorteil, dass der technische Aufwand gering gehalten werden kann. Vorteilhafterweise kann auf zusätzlichen Zuführkanäle oder dergleichen verzichtet werden.

In Ausgestaltung der Erfindung ist das erste Umwicklungsmaterial als Folie und das zweite Umwicklungsmaterial entweder als Garn oder als Folie einer anderen Art oder als Netz ausgebildet. Vorteilhafterweise kann auf diese Weise auf einfache Art und Weise zwischen dem ersten und dem zweiten Umwicklungsmaterial gewechselt werden.

In Ausgestaltung der Erfindung sind die eine oder mehrere Führungsrollen und/oder die Anpressrolle und/oder die Bremsrolle parallel zur Schwenkachse angeordnet.

In Ausgestaltung der Erfindung dient die Schwenkachse oder eine dazu parallele Achse als Kippkante, über die die erste Umwicklungsmaterialrolle mittels der Ladeeinrichtung kippbar ist, wenn die Ladeeinrichtung von der Ladestellung in die Betriebsstellung bewegt wird. Auf diese Art und Weise ist vorteilshafterweise ein kurzer Schwenkweg und ein schneller Beschickvorgang gewährleistet.

In Ausgestaltung der Erfindung ist der ersten Abrolleinrichtung eine Beladehilfe zur Führung und zur Übergabe der ersten Umwicklungsmaterialrolle an die Ladeeinrichtung in der Ladestellung zugeordnet. Die Beladehilfe kann insbesondere im Bereich einer Pressenwand oder der Deichsel der Ballenpresse angeordnet bzw. befestigt sein. Auf diese Weise lässt sich das Beladen der Ballenwickelvorrichtung, bevorzugt der ersten Abrolleinrichtung, besonders bevorzugt der Ladeeinrichtung, mit minimalem Kraftaufwand darstellen.

In Ausgestaltung der Erfindung umfasst die Beladehilfe zwei Führungsarme und die erste Umwicklungsmaterialrolle ist mittels, insbesondere zwischen, den Führungsarmen führbar und, insbesondere stirnseitig, der Ladeeinrichtung zuführbar. Die Führungsarme können V-förmig zueinander angeordnet sein. Die Führungsarme können jeweils eine Führungsrolle umfassen, die drehbar an den Führungsarmen gelagert sein können. Dadurch kann die erste Umwicklungsmaterialrolle mittels der, insbesondere auch zwischen den, Führungsarmen rollbar sein. Die Beladehilfe kann aber auch zweiteilig sein, also eine Transporteinrichtung, auf welcher die erste Umwicklungsmaterialrolle angeordnet ist, und eine Führung umfassen, die als Teil der Ladeeinrichtung ausgebildet ist. Die Führung kann beispielsweise als zwei Schienen ausgebildet sein, die bevorzugt auch parallel zur Anpressrolle ausgerichtet sind. Die erste Umwicklungsmaterialrolle kann dann mittels der Transporteinrichtung, beispielsweise einem Schlitten mit Rollen oder Gleitbügel, direkt von der Seite der Ladeeinrichtung mittels der Führung in die Ladeeinrichtung führbar und ggf. rollbar sein.

Die Erfindung betrifft weiter eine Ballenpresse, insbesondere eine Rundballenpresse, mit einer Ballenwickelvorrichtung, insbesondere der Ballenwickelvorrichtung nach einem der Ansprüche 1 bis 11. Die erfindungsgemässe Ballenpresse weist die oben beschriebenen Vorteile der erfindungsgemässen Ballenwickelvorrichtung auf.

Die erfindungsgemässe Ballenpresse und/oder die erfindungsgemässe Ballenwickelvorrichtung kann eine Steuereinrichtung aufweisen, die betreibbar ist, die Ballenwickelvorrichtung, insbesondere den Aktuator und/oder einen Antrieb der Antriebsrolle und/oder die Trenneinrichtung derart zu kontrollieren, dass die Ladeeinrichtung mittels des Aktuators zwischen der Ladestellung und der Betriebsstellung schwenkbar ist und/oder die Antriebsrolle beschleunigbar oder bremsbar ist und/oder das erste oder zweite Umwicklungsmaterial mit der Trenneinrichtung abgeschnitten wird. Ausserdem kann mit der Steuereinheit die Ballenpresse und/oder die Ballenwickelvorrichtung steuerbar und/oder regelbar sein. Die Steuereinheit (engl. ECU = electronic control unit oder ECM = electronic control module) kann ein elektronisches Modul und/oder ein eingebettetes System sein. Die Steuereinheit kann als Teil der Ballenwickelvorrichtung ausgebildet sein oder kann an der Ballenpresse oder an einem Zugfahrzeug, durch welches die Ballenpresse gezogen wird, bereits vorgesehen sein. Die Steuereinheit kann auch auf die Ballenpresse und das Zugfahrzeug verteilt sein. Die Steuereinheit und die Ballenwickelvorrichtung, insbesondere der Aktuator und/oder die Trenneinrichtung und/oder der Antrieb der Antriebsrolle können mittels eines Kabels oder Drahts oder aber drahtlos, also beispielsweise mittels Funk, miteinander verbunden werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung einer erfindungsgemässen Ballenpresse mit einer erfindungsgemässen Ballenwickelvorrichtung, und
- Fig. 2: eine schematische Darstellung der erfindungsgemässen Ballenwickelvorrichtung aus Figur 1 mit einer ersten Abrolleinrichtung mit Ladeeinrichtung in unbeladenem Zustand, und
- Fig. 3: eine schematische Darstellung der erfindungsgemässen Ballenwickelvorrichtung aus Figur 1 mit der ersten Abrolleinrichtung mit Ladeeinrichtung in Ladestellung, und
- Fig. 4: eine schematische Darstellung einer erfindungsgemässen Ballenwickelvorrichtung aus Figur 1 mit der ersten Abrolleinrichtung mit Ladeeinrichtung in Betriebsstellung, und
- Fig. 5: eine schematische Seitenansicht der erfindungsgemässen Ballenwickelvorrichtung mit einer Trenneinrichtung.

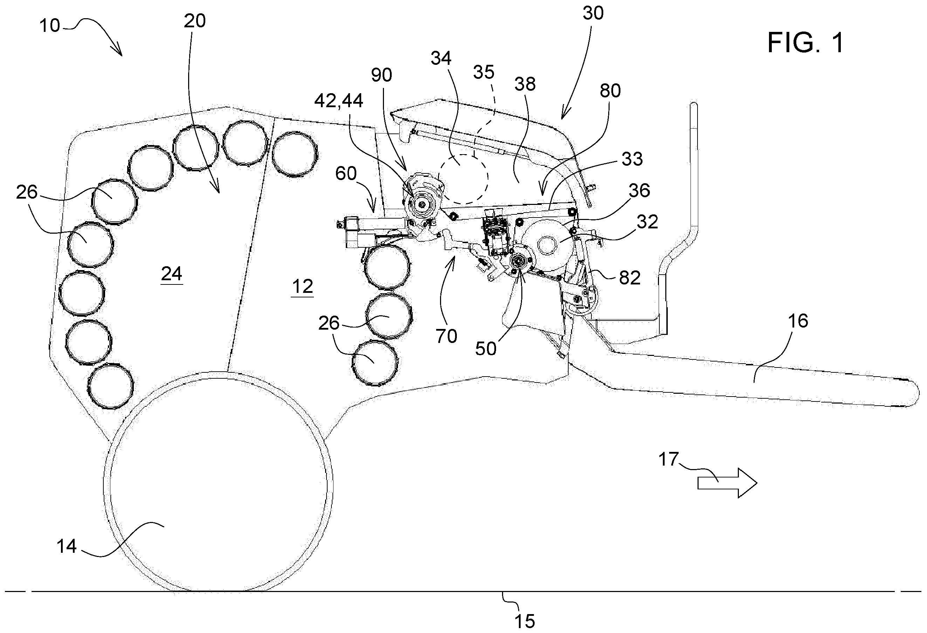

Figur 1 zeigt eine schematische Darstellung eines ersten Ausführungsbeispiels der erfindungsgemässen Ballenpresse, die als Rundballenpresse 10 ausgebildet ist, mit einer erfindungsgemässen Ballenwickelvorrichtung 30. Die in Figur 1 dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper oder Traktor, anschließbar ist.

An einer in Vorwärtsfahrtrichtung 17 vorderen unteren Seite des ersten Gehäuseteils 12 befindet sich in bekannter Weise eine Aufnahme- und Fördereinrichtung (nicht gezeigt) für Erntegut, wobei der erste Gehäuseteil 12 einen vorderen Teil einer Presskammer 20 umgibt. Am ersten Gehäuseteils 12, insbesondere am oberen Bereich des ersten Gehäuseteils 12, befindet sich ein Lager (nicht gezeigt) für ein schwenkbares zweites Gehäuseteil 24, das einen hinteren Teil der Presskammer 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Presskammer 20 gepressten Ballen dar.

Die Rundballenpresse 10, mit größenunveränderlicher Presskammer 20 ausgebildet, enthält eine Vielzahl zueinander parallel verlaufender Presselemente zum Pressen von Erntegut in Form von Presswalzen 26 (exemplarisch wurden hier nur einige wenige Presswalzen 26 mit dem Bezugszeichen "26" versehen), deren Rotationsachsen bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlicher Presskammer 20 bzw. als Rundballenpresse 10 mit variabler Presskammer 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickelvorrichtung 30, die mit einer ersten Umwicklungsmaterialrolle 32 mit einem ersten Umwicklungsmaterial 33 bestückt ist. Die Ballenwickelvorrichtung 30 umfasst eine erste Abrolleinrichtung 80, die eine Ladeeinrichtung 82 zum Beladen der ersten Abrolleinrichtung 80 mit der ersten Umwicklungsmaterialrolle 32 umfasst.

Die Ballenwickelvorrichtung 30 umfasst auch eine zweite Abrolleinrichtung 90 an, insbesondere in, der eine zweite Umwicklungsmaterialrolle 34 mit einem zweiten Umwicklungsmaterial 35 angeordnet sein kann oder ist. Als erstes Umwicklungsmaterial 33 kann bevorzugt eine Folie eingesetzt werden und das zweite Umwicklungsmaterial 35 entweder als Garn oder als Folie einer anderen Art oder als Netz ausgebildet sein. Die erste Umwicklungsmateriarolle 32 kann in einem ersten Kompartiment 36 und die zweite Umwicklungsmaterialrolle 34 kann in einem zweiten Kompartiment 38 der Rundballenpresse 10, insbesondere der Ballenwickelvorrichtung 30 angeordnet sein. Die Ballenwickelvorrichtung 30 umfasst ferner eine Zuführeinrichtung (nicht gezeigt) für das erste und/oder zweite Umwicklungsmaterial 33, 35, mittels welcher das erste Umwicklungsmaterial 33 von der ersten Umwicklungsmaterialrolle 32 und/oder das zweite Umwicklungsmaterial 35 von der zweiten Umwicklungsmaterialrolle 34 in die Presskammer 20 geführt wird. Bevorzugt kann die Zuführeinrichtung das erste Umwicklungsmaterial 33 von der ersten Umwicklungsmaterialrolle 32 oder das zweite Umwicklungsmaterial 35 von der zweiten Umwicklungsmaterialrolle 34 in die Presskammer 20 führen.

Nachdem der eigentliche Pressvorgang, also die Erntegutaufnahme und Bildung eines Rundballens durch die Presswalzen 26, abgeschlossen ist, wird die Ballenwickelvorrichtung 30 aktiviert, und ein sich dem Pressvorgang anschließender Umwicklungsvorgang eingeleitet. Bei Einleiten eines Umwicklungsvorgangs wird in der Einführungsphase durch eine mechanisch ausgelöste Zuführbewegung das erste und/oder zweite Umwicklungsmaterial in Richtung der Presskammer 20 geführt, so dass ein freies Umwicklungsmaterialende der ersten und/oder zweiten Umwicklungsmaterialrolle 32, 34 mit dem sich in der Presskammer 20 rotierenden Rundballen in Berührung kommen kann und das erste und/oder zweite Umwicklungsmaterial 33, 35 mitgerissen vom Ballen mitgerissen und aufgenommen wird. Durch Rotation des Rundballens wird das erste und/oder zweite Umwicklungsmaterial 33, 35 in der Wickelphase in einer oder mehreren Lagen um den Umfang des Rundballens gewickelt. Der Umwicklungsvorgang wird mit der Trennphase, in der das um den Rundballen gewickelte erste und/oder zweite Umwicklungsmaterial 33, 35 von der ersten und/oder zweiten Umwicklungsmaterialrolle 32, 34 durch eine Trenneinrichtung 40 getrennt wird, abgeschlossen.

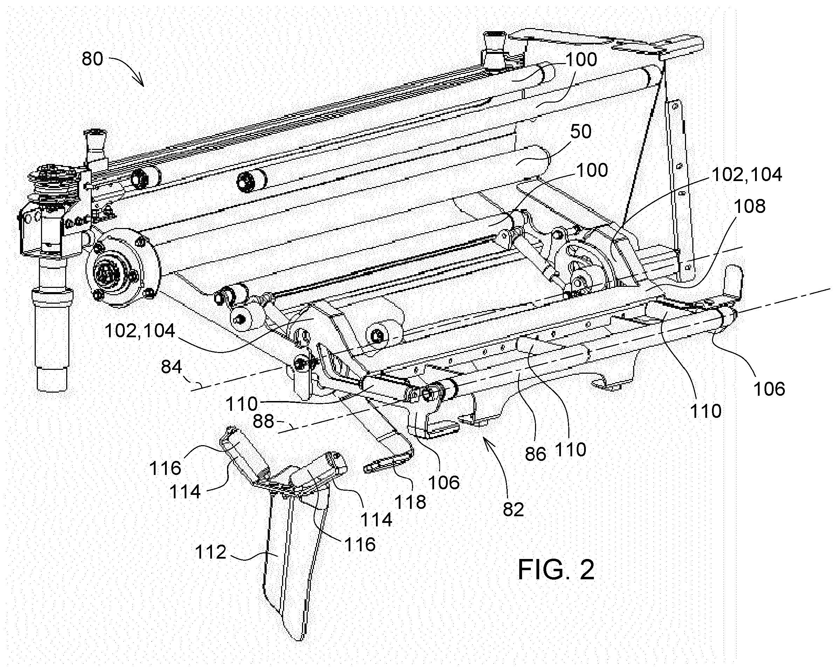

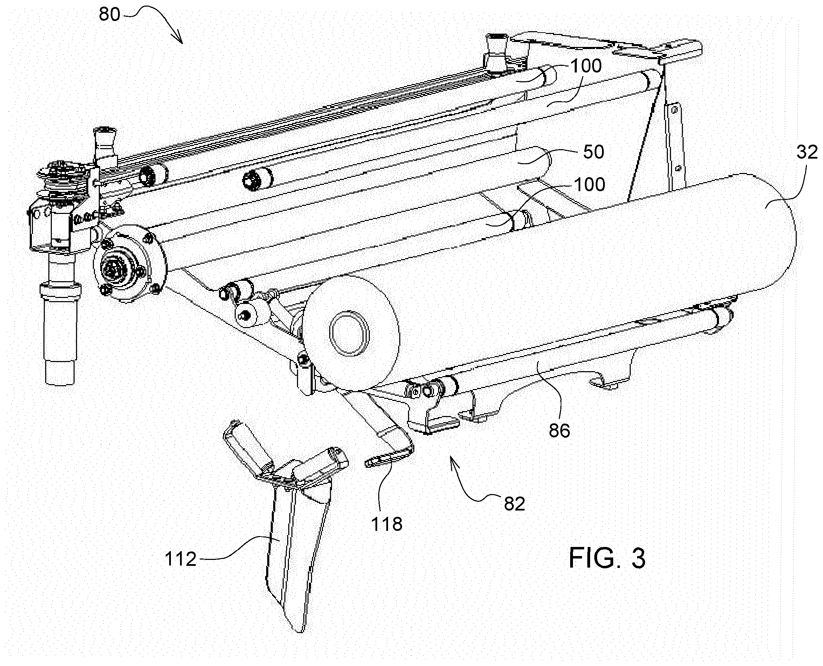

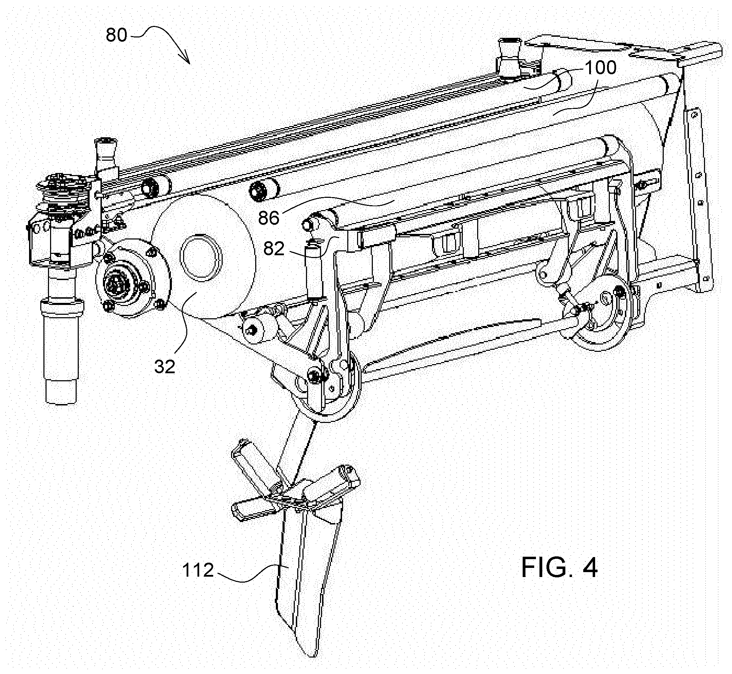

Die in den Figuren 2 bis 4 gezeigte schematische Darstellung der erfindungsgemässen Ballenwickelvorrichtung 30 mit einer ersten Abrolleinrichtung 80 mit Ladeeinrichtung 82, zeigt die Ladeeinrichtung 82 in unbeladenem Zustand (Figur 2), in Ladestellung (Figur 3) und in Betriebsstellung (Figur 4). Die Ballenwickelvorrichtungen 30 entsprechen im Wesentlichen der in Figur 1 gezeigten Ballenwickelvorrichtung 30 und ersten Abrolleinrichtung 80, sodass im Folgenden lediglich auf Details und/oder Unterschiede eingegangen wird. Die erste Abrolleinrichtung umfasst eine Ladeeinrichtung 82 zum Beladen der ersten Abrolleinrichtung 80 mit der ersten Umwicklungsmaterialrolle 32. Die Ladeeinrichtung ist um eine Schwenkachse 84 schwenkbar gelagert und zwischen einer Ladestellung (Figuren 2 und 3) und einer Betriebsstellung (Figur 4) schwenkbar. Die Ladeeinrichtung 82 weist ferner eine Anpressrolle 86 auf, wobei die Schwenkachse 84 parallel zur Rotationsachse 88 der Anpressrolle 86 angeordnet ist. Die Ladeeinrichtung 82 wirkt in der Betriebsstellung mittels der Anpressrolle 86 auf die erste Umwicklungsmaterialrolle 32, derart, dass die erste Umwicklungsmaterialrolle 32 von der Ladeeinrichtung 82 mittels der Anpressrolle 86 mit einer Anpresskraft beaufschlagbar ist. Ausserdem kann die erste Umwicklungsmaterialrolle 32, wie in Figur 4 gezeigt, von der Ladeeinrichtung 82 in der Betriebsstellung mittels der Anpressrolle 86 zumindest teilweise gehalten werden. Ebenso kann eine Position der ersten Umwicklungsmaterialrolle 32 von der Ladeeinrichtung 82 in der Betriebsstellung mittels der Anpressrolle 86 zumindest teilweise gesichert werden, insbesondere in der ersten Abrolleinrichtung 80. Die Anpressrolle 86 steht mit der ersten Umwicklungsmaterialrolle 32 in der Betriebsstellung der Ladeeinrichtung 82 in Eingriff. In der Ladestellung ist die Ladeeinrichtung 82 mit der ersten Umwicklungsmaterialrolle 32 beladbar, d.h. es ist möglich eine erste Umwicklungsmaterialrolle 32 in die Ladeeinrichtung 82 einzulegen oder zu entfernen. Die Ladevorrichtung 34 ist so geschaffen und angeordnet, dass eine erste Umwicklungsmaterialrolle 32 relativ bequem von einer Bedienungsperson auf die Ladeeinrichtung 82 aufgelegt und in die Betriebsstellung gebracht werden kann. Wird hingegen die Ladeeinrichtung 82, wie in den Figuren 2 bis 4 gezeigt, von der Ladestellung in die Betriebsstellung bewegt, wird die erste Abrolleinrichtung 80 mittels der beladenen Ladeeinrichtung 82 mit der ersten Umwicklungsmaterialrolle 32 beladen. Dabei dient die Schwenkachse 84 oder eine dazu parallele Achse als Kippkante, über die die erste Umwicklungsmaterialrolle 32 mittels der Ladeeinrichtung 82 kippbar ist, wenn die Ladeeinrichtung 82 von der Ladestellung in die Betriebsstellung bewegt wird. Aufgrund der Doppelfunktion der Ladeeinrichtung 82, also beladen der ersten Abrolleinrichtung 80 und ausüben einer Anpresskraft mittels der Anpressrolle 86, kann auf einen konstruktiv und mechanisch komplexen Aufbau der Ballenwickelvorrichtung 30 bzw. der Ballenpresse 10 verzichtet werden und die Ballenwickelvorrichtung 30 bzw. der Ballenpresse 10 kann auf einfache Art und Weise in Betrieb genommen werden.

Die erste Abrolleinrichtung 80 umfasst drei Führungsrollen und eine Bremsrolle 50. Die Führungsrollen 100 und die Anpressrolle 86 und die Bremsrolle 50 sind parallel zur Schwenkachse 84 angeordnet. Die Führungsrollen 100 und die Bremsrolle 50 können mit der ersten Umwicklungsmaterialrolle 32 und/oder dem ersten Umwicklungsmaterial 33 in Eingriff bringbar sein bzw. in Eingriff stehen. Die drei Führungsrollen 100 sind frei drehend und die Bremsrolle 50 ist frei drehend und bei Bedarf bremsbar ausgebildet. Mindestens eine der Führungsrollen 100 und die Bremsrolle 50 kann mit der ersten Umwicklungsmaterialrolle 32 in der Betriebsstellung in Eingriff bringbar sein. Dadurch kann die erste Umwicklungsmaterialrolle 32 in der Betriebsstellung von der Bremsrolle 50, der Führungsrolle 100 und der Anpressrolle 86 an drei Stellen gehalten werden, wenn die Ladeeinrichtung 82 mittels der Anpressrolle 86 auf die erste Umwicklungsmaterialrolle 32 wirkt.

Die Ladeeinrichtung 82 umfasst zwei Schwenkarme 102, die an dem jeweils einen Ende 104 um die Schwenkachse 86 schwenkbar gelagert sind, und an deren jeweils anderem Ende 106 die Anpressrolle 86 drehbar gelagert ist. An dem jeweiligen einen Ende 104 können die Schwenkarme 102 mittels Lager am Rahmen oder Fahrgestell oder der Seitenwand der Ballenpresse 10 gelagert sein. Ebenso kann die Anpressrolle 86 am anderen Ende 106 mittels weiterer Lager drehbar gelagert sein. Das Lager und/oder die weiteren Lager können von einer/einem Welle, Zapfen oder dergleichen gebildet werden, welche die Schwenk- und/oder Rotationsachse 84, 88 definiert/definieren, die sich wiederum quer zur Fahrtrichtung 17 erstrecken können. Darüber hinaus ist ein Tragelement 108 an den Schwenkarmen 102 angeordnet bzw. befestigt. Auch sind drei Laderollen 110 vorgesehen, wobei zwei der Laderollen 110 an den Schwenkarmen 102 angeordnet bzw. drehbar gelagert sind und parallel zu den Schwenkarmen 102 eine Laderolle 110 an einer Strebe zwischen Anpressrolle 86 und dem Tragelement 108 angeordnet bzw. drehbar gelagert ist.

Ausserdem ist der ersten Abrolleinrichtung 80 eine Beladehilfe 112 zur Führung und zur Übergabe der ersten Umwicklungsmaterialrolle 32 an die Ladeeinrichtung 82 in der Ladestellung zugeordnet. Die Beladehilfe 112 umfasst zwei Führungsarme 114, an welchen jeweils eine Führungsrolle 116 drehbar gelagert ist. Die erste Umwicklungsmaterialrolle 32 ist mittels der beiden Führungsarme 114 mit der jeweiligen Führungsrolle 116 einfach führbar und der Ladeeinrichtung 82 leicht zuführbar. Die Führungsarme 114 sind V-förmig zueinander angeordnet sein.

Im Weiteren ist ein Riegel 118 an der Ladeeinrichtung 82 vorgesehen, insbesondere derart, dass die Ladeeinrichtung 82 in der Betriebsstellung verriegelbar ist. Der Riegel 118 kann mechanisch ausgebildet und/oder in einer oder beiden Richtung/en vorgespannt oder mittels Fremdkraft bewegbar sein. Die Ladevorrichtung 82 kann mittels des Riegels 118 in wenigstens der Betriebsstellung gesichert werden, was von Vorteil ist, wenn auf die Ladeeinrichtung 82 äußere Kräfte wirken.

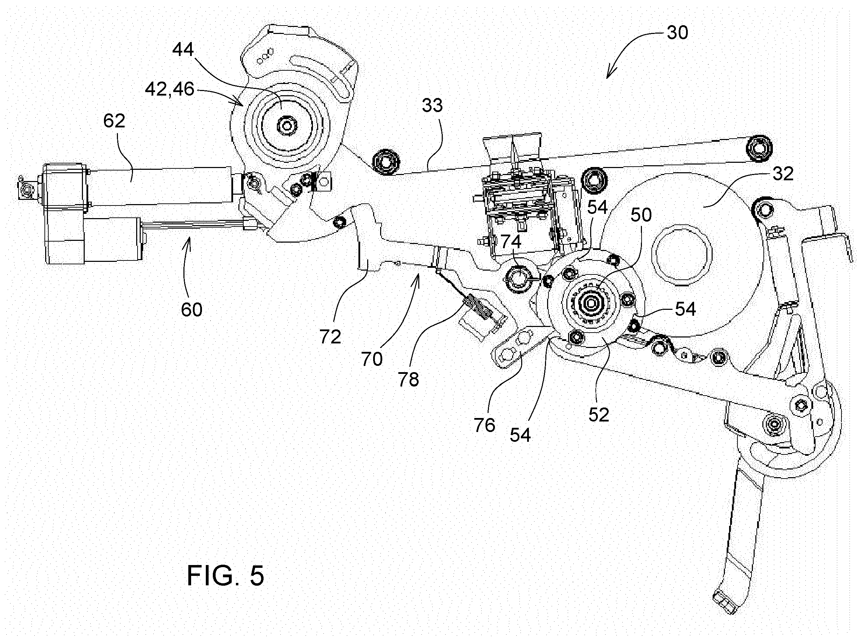

Die in Figuren 5 gezeigte schematische Seitenansicht, zeigt die erfindungsgemässe Ballenvorrichtung 30 aus Figur 1 mit einer Trenneinrichtung 60.

Die Darstellungen der Ballenwickelvorrichtung 30 entspricht im Wesentlichen der in Figur 1 bis 4 gezeigten Ballenwickelvorrichtung 30, sodass im Folgenden lediglich auf Details und/oder Unterschiede eingegangen wird. Wie in Figuren 5 im Detail dargestellt ist, umfasst die Ballenwickelvorrichtung 30 eine Antriebs- und Bremseinrichtung 42, die mit einer Antriebsrolle 44 verbunden ist. Die Antriebsrolle 44 kann mit der zweiten Umwicklungsmaterialrolle 34 in Eingriff stehen und/oder in einem Reibschluss stehen. Die Antriebs- und Bremseinrichtung 42 umfasst ferner eine kombinierte Antriebs- und Bremstrommel 46, die mit einem variabel spannbaren Antriebsriemen (nicht gezeigt) und/oder einem variabel spannbaren Bremsriemen (nicht gezeigt) in Verbindung stehen kann. Die Antriebs- und Bremstrommel 46 ist drehfest mit der Antriebsrolle 44 verbunden.

Die erste Umwicklungsmaterialrolle 32 kann mit der Bremsrolle 50 in Eingriff stehen bzw. kann mit dieser in einem Reibschluss stehen. Darüber hinaus umfasst die Ballenwickelvorrichtung 30 die Trenneinrichtung 60 zum Abtrennen des ersten und/oder zweiten Umwicklungsmaterials 33, 35 von der ersten und/oder zweiten Umwicklungsmaterialrolle 32, 34. Ausserdem ist noch eine Blockiereinrichtung 70 vorgesehen ist, die mit der Bremsrolle 50 zusammenwirkt, wobei die Blockiereinrichtung 70 mittels der Trenneinrichtung 60 derart betätigbar ist, dass eine Drehbewegung der Bremsrolle 50 mit der Blockiereinrichtung 70 bremsbar, insbesondere stoppbar und/oder blockierbar, ist.

Die Trenneinrichtung 60 umfasst einen Aktuator 62, der zwischen mindestens einer aktiven Trennposition und einer inaktiven Trennposition bewegbar ist. Die Blockiereinrichtung 70 ist dabei mittels der Trenneinrichtung 60 derart betätigbar, dass eine Drehbewegung der Bremsrolle 50 mit der Blockiereinrichtung 70 bremsbar, insbesondere stoppbar und/oder blockierbar, ist, wenn die Trenneinrichtung 60 in der aktiven Trennposition ist bzw. in die aktive Trennposition bewegt wird. Die Blockiereinrichtung 70 umfasst einen betätigbaren Bremshebel 72, der um einen Drehpunkt 74 rotierbar ist. Der Bremshebel weist einem ersten Ende ein Bremselement 76 auf, das als Anschlag ausgebildet ist. An einem zweiten Ende ist der Bremshebel 72 mit der Trenneinrichtung 60 verbunden. Im Speziellen kann Aktuator 62 der Trenneinrichtung 60 auch über ein Verbindungselement 64 mit dem Bremshebel 72 verbunden sein. Die Blockiereinrichtung 70 kann ausserdem ein Rückstellelement 78 umfassen. Ein zweites Ende des Bremshebels ist mit dem Aktuator 62 verbunden. Die Bremsrolle 50 umfasst eine Bremskupplung 52, die als Scheibe ausgebildet ist, ist drehfest mit der Bremsrolle 50 verbunden. Die Bremskupplung 52 umfasst ausserdem drei Betätigungselemente 54, die als Mitnehmer ausgebildet sind. Die Betätigungselemente 54 sind mit dem Bremslement 76 greifbar. Dabei ist der Bremshebel 72 mittels der Trenneinrichtung 60, insbesondere dem Aktuator 62, derart betätigbar, dass das Bremselement 76 an dem Betätigungselement 54 anliegt.

## Patentansprüche

1. Ballenwickelvorrichtung für eine Ballenpresse (10),
mit einer ersten Umwicklungsmaterialrolle (32) mit einem ersten Umwicklungsmaterial (34), und einer ersten Abrolleinrichtung (80), wobei die erste Abrolleinrichtung (80) eine Ladeeinrichtung (82) zum Beladen der ersten Abrolleinrichtung (80) mit der ersten Umwicklungsmaterialrolle (32) umfasst, und die Ladeeinrichtung (82) um eine Schwenkachse (84) schwenkbar gelagert ist und zwischen einer Ladestellung und einer Betriebsstellung schwenkbar ist,
wobei
die Ladeeinrichtung (82) eine Anpressrolle (86) aufweist, wobei die Schwenkachse (84) parallel zur Rotationsachse (88) der Anpressrolle (86) angeordnet ist, und die Ladeeinrichtung (82) in der Betriebsstellung mittels der Anpressrolle (86) auf die erste Umwicklungsmaterialrolle (32) wirkt, derart, dass die erste Umwicklungsmaterialrolle (32) von der Ladeeinrichtung (82) mittels der Anpressrolle (86) mit einer Anpresskraft beaufschlagbar ist,
**dadurch gekennzeichnet, dass**
die erste Abrolleinrichtung (80) eine Führungsrolle (100) und eine Bremsrolle (50) umfasst, die mit der ersten Umwicklungsmaterialrolle (32) in Eingriff bringbar sind, und die Ladeeinrichtung (82) in der Betriebsstellung mittels der Anpressrolle (86) auf die erste Umwicklungsmaterialrolle (32) wirkt, derart, dass die erste Umwicklungsmaterialrolle (32) von der Ladeeinrichtung (82) mittels der Anpressrolle (86) mit einer Anpresskraft beaufschlagbar ist und die erste Umwicklungsmaterialrolle (32) von der Bremsrolle (50), der Führungsrolle (100) und der Anpressrolle (86) an drei Stellen haltbar ist.

2. Ballenwickelvorrichtung nach Anspruch 1, **dadurch gekennzeichnet, dass** die Ladeeinrichtung (82) mindestens zwei Schwenkarme (102) umfasst, die an dem jeweils einen Ende (104) um die Schwenkachse (84) schwenkbar gelagert sind, und an deren jeweils anderem Ende (106) die Anpressrolle (86) drehbar gelagert ist.

3. Ballenwickelvorrichtung nach mindestens einem der vorangehenden Ansprüche, **dadurch gekennzeichnet, dass** ein Tragelement (108) an den Schwenkarmen (102) angeordnet ist.

4. Ballenwickelvorrichtung nach Anspruch 1, **dadurch gekennzeichnet, dass** an den Schwenkarmen (102) und/oder parallel zu den Schwenkarmen (102) mindestens eine Laderolle (110) angeordnet ist.

5. Ballenwickelvorrichtung (16) nach mindestens einem der vorangehenden Ansprüche, umfassend eine zweite Abrolleinrichtung (90) und eine zweite Umwicklungsmaterialrolle (34) mit einem zweiten Umwicklungsmaterial (35).

6. Ballenwickelvorrichtung nach mindestens einem der vorangehenden Ansprüche, **dadurch gekennzeichnet, dass** das erste Umwicklungsmaterial (34) als Folie und das zweite Umwicklungsmaterial (35) entweder als Garn oder als Folie einer anderen Art oder als Netz ausgebildet ist.

7. Ballenwickelvorrichtung nach einem oder mehreren der vorherigen Ansprüche, **dadurch gekennzeichnet, dass**
eine oder mehrere Führungsrollen (100) und/oder die Anpressrolle (86) und/oder die Bremsrolle (50) parallel zur Schwenkachse (84) angeordnet sind.

8. Ballenwickelvorrichtung nach mindestens einem der vorangehenden Ansprüche, **dadurch gekennzeichnet, dass** die Schwenkachse (84) oder eine dazu parallele Achse als Kippkante dient, über die die erste Umwicklungsmaterialrolle (32) mittels der Ladeeinrichtung (82) kippbar ist, wenn die Ladeeinrichtung (82) von der Ladestellung in die Betriebsstellung bewegt wird.

9. Ballenwickelvorrichtung nach mindestens einem der vorangehenden Ansprüche, **dadurch gekennzeichnet, dass** der ersten Abrolleinrichtung (80) eine Beladehilfe (112) zur Führung und zur Übergabe der ersten Umwicklungsmaterialrolle (32) an die Ladeeinrichtung (82) in der Ladestellung zugeordnet ist.

10. Ballenwickelvorrichtung nach mindestens einem der vorangehenden Ansprüche, **dadurch gekennzeichnet, dass** die
Beladehilfe (112) zwei Führungsarme (114) umfasst, und die erste Umwicklungsmaterialrolle (32) mittels der beiden Führungsarme (114) führbar und der Ladeeinrichtung (82) zuführbar ist.

11. Ballenpresse mit einer Ballenwickelvorrichtung (30) nach einem der Ansprüche 1 bis 10.

## Claims

1. Bale-wrapping apparatus for a baler (10),
having a first wrapping-material roller (32) with a first wrapping material (34), and having a first unrolling device (80), wherein the first unrolling device (80) comprises a loading device (82) for loading the first unrolling device (80) with the first wrapping-material roller (32), and the loading device (82) is mounted so as to be pivotable about a pivot axis (84) and is pivotable between a loading position and an operating position, wherein the loading device (82) has a contact-pressure roller (86), wherein the pivot axis (84) is oriented parallel to the axis of rotation (88) of the contact-pressure roller (86), and, in the operating position, the loading device (82) acts on the first wrapping-material roller (32) by means of the contact-pressure roller (86) in such a way that the first wrapping-material roller (32) is able to be subjected to a contact-pressure force by the loading device (82) by means of the contact-pressure roller (86),
**characterized in that**
the first unrolling device (80) comprises a guide roller (100) and a brake roller (50), which are able to be brought into engagement with the first wrapping-material roller (32), and, in the operating position, the loading device (82) acts on the first wrapping-material roller (32) by means of the contact-pressure roller (86) in such a way that the first wrapping-material roller (32) is able to be subjected to a contact-pressure force by the loading device (82) by means of the contact-pressure roller (86) and the first wrapping-material roller (32) is able to be held at three points by the brake roller (50), the guide roller (100) and the contact-pressure roller (86).

2. Bale-wrapping apparatus according to Claim 1, **characterized in that** the loading device (82) comprises at least two pivot arms (102) which, at in each case one end (104), are mounted so as to be pivotable about the pivot axis (84), and, at their in each case other end (106), the contact-pressure roller (86) is rotatably mounted.

3. Bale-wrapping apparatus according to at least either of the preceding claims, **characterized in that** a supporting element (108) is arranged on the pivot arms (102).

4. Bale-wrapping apparatus according to Claim 1, **characterized in that** at least one loading roller (110) is arranged on the pivot arms (102) and/or parallel to the pivot arms (102).

5. Bale-wrapping apparatus (16) according to at least one of the preceding claims, comprising a second unrolling device (90) and a second wrapping-material roller (34) with a second wrapping material (35).

6. Bale-wrapping apparatus according to at least one of the preceding claims, **characterized in that** the first wrapping material (34) is in the form of a film and the second wrapping material (35) is in the form of a yarn or in the form of a film of another kind or in the form of a netting.

7. Bale-wrapping apparatus according to one or more of the preceding claims, **characterized in that** one or more guide rollers (100) and/or the contact-pressure roller (86) and/or the brake roller (50) are/is arranged parallel to the pivot axis (84).

8. Bale-wrapping apparatus according to at least one of the preceding claims, **characterized in that** the pivot axis (84) or an axis parallel thereto serves as a tilt edge via which the first wrapping-material roller (32) is tiltable by means of the loading device (82) when the loading device (82) is moved from the loading position into the operating position.

9. Bale-wrapping apparatus according to at least one of the preceding claims, **characterized in that** the first unrolling device (80) is assigned a loading aid (112) for guiding and for transferring the first wrapping-material roller (32) to the loading device (82) in the loading position.

10. Bale-wrapping apparatus according to at least one of the preceding claims, **characterized in that** the loading aid (112) comprises two guide arms (114), and the first wrapping-material roller (32) is able to be guide by means of the two guide arms (114) and is able to be supplied to the loading device (82).

11. Baler having a bale-wrapping apparatus (30) according to one of Claims 1 to 10.

## Revendications

1. Dispositif d'enveloppement de balles pour une presse à balles (10),
avec un premier rouleau de matériau d'enveloppement (32) avec un premier matériau d'enveloppement (34), et un premier appareil de déroulement (80), le premier appareil de déroulement (80) comprenant un appareil de chargement (82) pour charger le premier appareil de déroulement (80) avec le premier rouleau de matériau d'enveloppement (32), et l'appareil de chargement (82) étant monté de manière pivotante autour d'un axe de pivotement (84) et étant pivotant entre une position de chargement et une position de fonctionnement,
l'appareil de chargement (82) présentant un rouleau de pression (86), l'axe de pivotement (84) étant agencé parallèlement à l'axe de rotation (88) du rouleau de pression (86), et l'appareil de chargement (82) agissant dans la position de fonctionnement au moyen du rouleau de pression (86) sur le premier rouleau de matériau d'enveloppement (32), de telle sorte que le premier rouleau de matériau d'enveloppement (32) peut être sollicité par l'appareil de chargement (82) au moyen du rouleau de pression (86) avec une force de pression, **caractérisé en ce que**
le premier appareil de déroulement (80) comprend un rouleau de guidage (100) et un rouleau de freinage (50), qui peuvent être mis en prise avec le premier rouleau de matériau d'enveloppement (32), et l'appareil de chargement (82), dans la position de fonctionnement, agit au moyen du rouleau de pression (86) sur le premier rouleau de matériau d'enveloppement (32), de telle sorte que le premier rouleau de matériau d'enveloppement (32) peut être sollicité par l'appareil de chargement (82) au moyen du rouleau de pression (86) avec une force de pression et le premier rouleau de matériau d'enveloppement (32) peut être maintenu en trois endroits par le rouleau de freinage (50), le rouleau de guidage (100) et le rouleau de pression (86).

2. Dispositif d'enveloppement de balles selon la revendication 1, **caractérisé en ce que** l'appareil de chargement (82) comprend au moins deux bras pivotants (102) qui sont montés de manière pivotante autour de l'axe de pivotement (84) à une extrémité (104) respective et à l'autre extrémité (106) respective desquels le rouleau de pression (86) est monté de manière rotative.

3. Dispositif d'enveloppement de balles selon au moins l'une quelconque des revendications précédentes, **caractérisé en ce qu'**un élément de support (108) est agencé sur les bras pivotants (102).

4. Dispositif d'enveloppement de balles selon la revendication 1, **caractérisé en ce qu'**au moins un rouleau de chargement (110) est agencé sur les bras pivotants (102) et/ou parallèlement aux bras pivotants (102).

5. Dispositif d'enveloppement de balles (16) selon au moins l'une quelconque des revendications précédentes, comprenant un deuxième appareil de déroulement (90) et un deuxième rouleau de matériau d'enveloppement (34) avec un deuxième matériau d'enveloppement (35).

6. Dispositif d'enveloppement de balles selon au moins l'une quelconque des revendications précédentes, **caractérisé en ce que** le premier matériau d'enveloppement (34) est configuré sous forme de film et le deuxième matériau d'enveloppement (35) est configuré soit sous forme de fil, soit sous forme de film d'un autre type, soit sous forme de filet.

7. Dispositif d'enveloppement de balles selon une ou plusieurs des revendications précédentes, **caractérisé en ce qu'**un ou plusieurs rouleaux de guidage (100) et/ou le rouleau de pression (86) et/ou le rouleau de freinage (50) sont agencés parallèlement à l'axe de pivotement (84) .

8. Dispositif d'enveloppement de balles selon au moins l'une des revendications précédentes, **caractérisé en ce que** l'axe de pivotement (84) ou un axe parallèle à celui-ci sert de bord de basculement au-dessus duquel le premier rouleau de matériau d'enveloppement (32) peut être basculé au moyen de l'appareil de chargement (82) lorsque l'appareil de chargement (82) est déplacé de la position de chargement à la position de fonctionnement.

9. Dispositif d'enveloppement de balles selon au moins l'une quelconque des revendications précédentes, **caractérisé en ce qu'**une aide au chargement (112) est associée au premier appareil de déroulement (80) pour guider et transférer le premier rouleau de matériau d'enveloppement (32) vers l'appareil de chargement (82) dans la position de chargement.

10. Dispositif d'enveloppement de balles selon au moins l'une quelconque des revendications précédentes, **caractérisé en ce que** l'aide au chargement (112) comprend deux bras de guidage (114), et le premier rouleau de matériau d'enveloppement (32) peut être guidé au moyen des deux bras de guidage (114) et amené à l'appareil de chargement (82).

11. Presse à balles avec un dispositif d'enveloppement de balles (30) selon l'une quelconque des revendications 1 à 10.
